# EUROPEAN PATENT SPECIFICATION

(11) **EP 3 764 448 B1**
(45) Date of publication and mention of the grant of the patent: **13.11.2024**
(21) Application number: 19764639.1
(22) Date of filing: 14.02.2019
(51) Int. Cl.: H01M 8/1213, H01M 4/86, H01M 8/1246, H01M 8/1253, H01M 8/126, C01G 25/00, H01M 8/12, H01M 4/90, H01M 8/00, H01M 8/124, H01M 8/1231

(54) **ELECTROLYTE LAYER-ANODE COMPOSITE MEMBER AND CELL STRUCTURE**
ELEKTROLYTSCHICHTANODEN-VERBUNDELEMENT UND ZELLSTRUKTUR
ÉLÉMENT COMPOSITE DE COUCHE D'ÉLECTROLYTE-ANODE ET STRUCTURE DE CELLULE

(30) Priority: 06.03.2018 JP 2018039522
(43) Date of publication of application: 13.01.2021
(73) Proprietor: SUMITOMO ELECTRIC INDUSTRIES, LTD., Osaka-shi, Osaka 541-0041 (JP)
(72) Inventor: HIRAIWA, Chihiro, Osaka-shi, Osaka 541-0041 (JP); MIZUHARA, Naho, Osaka-shi, Osaka 541-0041 (JP); OGAWA, Mitsuyasu, Osaka-shi, Osaka 541-0041 (JP); TAWARAYAMA, Hiromasa, Osaka-shi, Osaka 541-0041 (JP); HIGASHINO, Takahiro, Osaka-shi, Osaka 541-0041 (JP); MAJIMA, Masatoshi, Osaka-shi, Osaka 541-0041 (JP)
(74) Representative: Boult Wade Tennant LLP
(86) International application number: PCT/JP2019/005247
(87) International publication number: WO 2019/171900

(56) References cited:
- JP-A- 2007 194 170
- JP-A- 2010 238 432
- JP-A- 2012 142 243
- JP-A- 2016 100 196
- JP-A- 2017 041 308
- KR-B1- 101 439 176
- BARAL ASHOK KUMAR ET AL: "Processing and characterizations of a novel proton-conducting BaCe0.35Zr0.50Y0.15O3-[delta] electrolyte and its nickel-based anode composite for anode-supported IT-SOFC", MATERIALS FOR RENEWABLE AND SUSTAINABLE ENERGY, vol. 3, no. 4, 13 August 2014 (2014-08-13), XP055854313, ISSN: 2194-1459, Retrieved from the Internet <URL:http://link.springer.com/content/pdf/10.1007/s40243-014-0035-4.pdf> DOI: 10.1007/s40243-014-0035-4

## Description

### TECHNICAL FIELD

The present disclosure relates to an electrolyte layer-anode composite member and a cell structure. The present application claims priority to Japanese Patent Application No. 2018-039522 filed on March 6, 2018.

### BACKGROUND ART

A fuel cell is a device that generates power by an electrochemical reaction between a fuel such as hydrogen and air (oxygen). A fuel cell can directly convert chemical energy into electricity and thus has a high power generation efficiency. Inter alia, a solid oxide fuel cell (hereinafter referred to as an "SOFC") having an operating temperature of 700°C or higher, about 800°C to 1000°C in particular, has a fast reaction speed, and it is easily handled as it has a cell structure with its constituent elements all being solid.

The cell structure includes a cathode, an anode, and a solid electrolyte layer interposed between the cathode and the anode. A composite member made of the solid electrolyte layer and the anode is obtained, for example, by shaping a precursor of the anode, then applying a solid electrolyte to a surface thereof, and performing co-sintering. In the composite member thus obtained, the solid electrolyte layer and the anode are integrated by sintering.

The electrolyte layer-anode composite member may have warpage, due to a difference in expansion coefficient between a precursor of the solid electrolyte layer and the precursor of the anode in the co-sintering step. The warpage of the electrolyte layer-anode composite member leads to a decrease in power generation performance. When the warpage is too much, the electrolyte layer-anode composite member may be broken. Accordingly, Japanese Patent Laying-Open No. 2013-206702 (PTL 1) teaches controlling the thermal expansion coefficient of a solid electrolyte.

### CITATION LIST

### PATENT LITERATURE

PTL 1: Japanese Patent Laying-Open No. 2013-206702,
PTL 2: KR101439176;
non-PTL: Kumar et al., "Processing and characterizations of a novel proton-conducting BaCe0.35Zr0.50Y0.15O3-δ electrolyte and its nickel-based anode composite for anode-supported IT-SOFC", Materials for Renewable and Sustainable Energy, vol. 3, no. 4, 13 August 2014.

### SUMMARY OF INVENTION

One aspect of the present disclosure relates to an electrolyte layer-anode composite member including: an anode including a first metal oxide having a perovskite crystal structure; and a solid electrolyte layer including a second metal oxide having a perovskite crystal structure, the anode including at least one of nickel and a nickel compound, the anode having a sheet-like shape, the solid electrolyte layer having a sheet-like shape, the solid electrolyte layer being stacked on the anode, the anode having a thickness Ta of 850 µm or more.

Another aspect of the present disclosure relates to a cell structure including: the electrolyte layer-anode composite member described above; and a cathode, the cathode having a sheet-like shape, the cathode being stacked on the solid electrolyte layer of the electrolyte layer-anode composite member.

### BRIEF DESCRIPTION OF DRAWINGS

Fig. 1 is a cross sectional view schematically showing an electrolyte layer-anode composite member in accordance with one embodiment of the present disclosure.
Fig. 2 is a graph showing the result of a simulation of the relation between the thickness of an anode and the warpage of the composite member.
Fig. 3 is a graph showing the result of a simulation of the relation between the thickness of the anode and the residual stress of the composite member.
Fig. 4 is a plan view schematically showing the anode in accordance with the one embodiment of the present disclosure.

### DETAILED DESCRIPTION

### [Problem to be Solved by the Present Disclosure]

Warpage of an electrolyte layer-anode composite member is suppressed by a technique simpler than that in PTL 1.

Further, residual stress at an interface between a solid electrolyte layer and an anode is suppressed.

### [Advantageous Effect of the Present Disclosure]

According to the present disclosure, warpage and residual stress of an electrolyte layer-anode composite member are suppressed. Thus, a fuel cell using the same has an improved power generation performance.

### [Description of Embodiment of the Present Disclosure]

First, the contents of an embodiment of the present disclosure will be enumerated.
(1) An electrolyte layer-anode composite member in accordance with one embodiment of the present disclosure includes an anode including a first metal oxide having a perovskite crystal structure, and a solid electrolyte layer including a second metal oxide having a perovskite crystal structure, the anode including at least one of nickel and a nickel compound, the anode having a sheet-like shape, the solid electrolyte layer having a sheet-like shape, the solid electrolyte layer being stacked on the anode, the anode having a thickness Ta of 850 µm or more. Thereby, warpage and residual stress of the electrolyte layer-anode composite member are reduced.
(2) The first metal oxide may be a compound represented by the following formula (1):

   A1ₘB1ₙC1₁₋ₙO_{3-δ} formula (1),

   where an element A1 is at least one selected from the group consisting of Ba, Ca, and Sr, an element B1 is at least one selected from the group consisting of Ce and Zr, an element C1 is at least one selected from the group consisting of Y, Yb, Er, Ho, Tm, Gd, In, and Sc, 0.85≤m≤1, 0.5≤n<1, and δ represents an oxygen vacancy concentration.
(3) The second metal oxide may be a compound represented by the following formula (2):

   A2ₓB2_{y}C2_{1-y}O_{3-δ} formula (2),

   where an element A2 is at least one selected from the group consisting of Ba, Ca, and Sr, an element B2 is at least one selected from the group consisting of Ce and Zr, an element C2 is at least one selected from the group consisting of Y, Yb, Er, Ho, Tm, Gd, In, and Sc, 0.85≤x≤1, 0.5≤y<1, and δ represents an oxygen vacancy concentration.
(4) The thickness Ta of the anode and a thickness Te of the solid electrolyte layer may satisfy a relation of 0.003≤Te/Ta≤0.036.
(5) A thickness Te of the solid electrolyte layer may be 5 µm or more and 30 µm or less.
(6) The anode has a circular sheet-like shape, and the thickness Ta of the anode and a diameter Da of the anode may satisfy a relation of 55≤Ta/Da≤300.
(7) The diameter Da of the anode may be 5 cm or more and 15 cm or less. In the above case, the warpage and the residual stress of the electrolyte layer-anode composite member are further reduced.
(8) The thickness Ta of the anode may be 1500 µm or less. Thereby, gas diffusivity of the anode is improved.
(9) A cell structure in accordance with one embodiment of the present disclosure includes the electrolyte layer-anode composite member described above, and a cathode, the cathode having a sheet-like shape, the cathode being stacked on the solid electrolyte layer of the electrolyte layer-anode composite member. A fuel cell including this cell structure is excellent in power generation performance.

### [Details of Embodiment of the Invention]

A specific example of an embodiment of the present invention will be described below with reference to the drawings as appropriate. It should be noted that the present invention is not limited to these examples; rather, it is defined by the appended claims, and is intended to encompass any modification within the meaning and scope of the claims.

In the present specification, an expression in the form of "X to Y" means upper and lower limits of a range (that is, X or more and Y or less), and when X is not accompanied by any unit and Y is alone accompanied by a unit, X has the same unit as Y.

An electrolyte layer-anode composite member (hereinafter may be simply referred to as a "composite member") in accordance with the present embodiment includes an anode and a solid electrolyte layer, and is used with being incorporated into a fuel cell, for example. The anode includes a first metal oxide having a perovskite crystal structure. The solid electrolyte layer includes a second metal oxide having a perovskite crystal structure. The solid electrolyte layer and the anode are co-sintered and integrated.

In one aspect of the present embodiment, the anode may have a sheet-like shape, the solid electrolyte layer may have a sheet-like shape, and the solid electrolyte layer may be stacked on the anode.

A precursor of the anode subjected to the co-sintering includes, for example, nickel oxide (NiO), which is a precursor of nickel serving as a catalyst, in addition to a metal oxide having a perovskite crystal structure. The linear expansion coefficient of NiO is higher than the linear expansion coefficient of the metal oxide having a perovskite crystal structure (for example, the first metal oxide and the second metal oxide described above). Accordingly, the thermal expansion coefficient of the precursor of the anode including NiO is higher than that of the solid electrolyte layer. Due to the difference in thermal expansion coefficient between the precursor of the anode and the precursor of the solid electrolyte layer in the co-sintering step, in the obtained composite member, residual stress occurs at an interface between the anode and the solid electrolyte layer, and warpage occurs in a direction in which the anode side serves as an inside.

In the present embodiment, the residual stress and the warpage of the composite member are suppressed by an extremely simple technique of controlling the thickness of the anode. That is, a thickness Ta of the anode is set to 850 µm or more. This suppresses deformation of the precursor of the anode in a thickness direction in the co-sintering step, decreasing the residual stress and the warpage of the composite member. Here, the "thickness" of the anode means a minimal distance between one main surface and the other main surface of the anode having a sheet-like shape. The same applies to the thickness of the solid electrolyte layer and the thickness of a cathode described later.

Conventionally, the thickness of an anode is about 600 µm to 700 µm, because a too thick anode leads to a decrease in gas diffusivity and cost increase. However, such a thin anode is more likely to be deformed in the thickness direction in the co-sintering step. Accordingly, residual stress and warpage of a composite member increase, which rather results in a decreased power generation performance of a fuel cell.

When the anode has a sheet-like shape, the thickness Ta of the anode is preferably 900 µm or more. From the viewpoint of gas diffusivity, the thickness Ta of the anode is preferably 1500 µm or less, and more preferably 1200 µm or less.

The thickness Ta of the anode can be calculated by taking a scanning electron microscope (SEM) photograph of a cross section of the composite member. Specifically, first, in an SEM photograph of any cross section S of the composite member, an average value of thicknesses of the anode at any five points is obtained. This is defined as a thickness of the anode in cross section S. Similarly, thicknesses of the anode in any cross sections at four other locations are calculated. The thicknesses of the anode in the cross sections at these five locations are further averaged to obtain a value, which serves as the thickness Ta of the anode. A thickness Te of the solid electrolyte layer and the thickness of the cathode are similarly obtained.

The acceptable amount of the warpage of the composite member varies depending on the number of stacks, the configuration, and the like of the cell structure. For example, when the composite member has a circular sheet-like shape because good stackability is achieved and breakage during stacking is more likely to be suppressed, warpage of the composite member having a diameter of 5 cm or more and 15 cm or less is preferably 1 mm or less. The diameter of the composite member may be calculated as a diameter of a corresponding circle having the same area as that of one main surface of the composite member. A diameter Da of the anode can also be calculated similarly.

The residual stress of the composite member is preferably less than or equal to a transverse intensity of the cell structure including the composite member. The transverse intensity of the cell structure varies depending on the material and the thickness of the anode, the material and the thickness of the solid electrolyte layer, and the like. The transverse intensity of the cell structure is preferably 100 MPa or more, for example, because breakage while assembling and using the fuel cell is more likely to be suppressed.

### (Anode)

The anode preferably has a sheet-like shape, and more preferably has a circular sheet-like shape. The anode includes the first metal oxide having a perovskite crystal structure. By including the first metal oxide, the anode can have proton conductivity. In addition, the anode preferably has a porous structure. That is, in one aspect of the present embodiment, such an anode has a proton-conductive porous structure. In the anode having proton conductivity, a reaction to oxidize a fuel such as hydrogen introduced through a fuel channel and release protons and electrons (a reaction of oxidation of the fuel) is performed. A proton-conductive fuel cell (PCFC) can operate in a medium temperature range of 400 to 600°C, for example. Accordingly, the PCFC can be used for various applications.

The anode includes at least one of nickel and a nickel compound (hereinafter referred to as a "Ni compound") serving as a catalyst component, in addition to the first metal oxide. A material for such an anode includes the Ni compound in addition to the first metal oxide. The content rate of the Ni compound in the material for the anode is 40 to 90% by mass, for example, and may be 60 to 90% by mass, or 60 to 80% by mass. Examples of the Ni compound include hydroxides, salts (such as inorganic acid salts such as carbonate), halides, and the like. Inter alia, a Ni oxide such as NiO is preferably used due to a small volume change. One type of Ni compound may be used alone, or two or more types of Ni compounds may be used in combination. The content ratio of the nickel and the Ni compound in the anode can be determined by an X-ray diffraction method, for example.

In addition, the content rate of the first metal oxide in the material for the anode may be 10 to 60% by mass, 10 to 40% by mass, or 20 to 40% by mass, for example. The content ratio of the first metal oxide in the anode can be determined by an X-ray diffraction method, for example.

As the first metal oxide, a solid electrolyte (compound) represented by the following formula (1):

A1ₘB1ₙC1₁₋ₙO_{3-δ} formula (1)

is preferably indicated as an example, where 0.85≤m≤1, 0.5≤n<1, and δ represents an oxygen vacancy concentration.

An element A1 is at least one selected from the group consisting of barium (Ba), calcium (Ca), and strontium (Sr). Inter alia, the element A1 preferably includes Ba from the viewpoint of proton conductivity.

An element B1 is at least one selected from the group consisting of cerium (Ce) and zirconium (Zr). Inter alia, the element B1 preferably includes Zr from the viewpoint of proton conductivity.

An element C1 is at least one selected from the group consisting of yttrium (Y), ytterbium (Yb), erbium (Er), holmium (Ho), thulium (Tm), gadolinium (Gd), indium (In), and scandium (Sc). Inter alia, the element C1 preferably includes Y from the viewpoint of proton conductivity and chemical stability.

Inter alia, a compound represented by BaZrₐY₁₋ₐO_{3-δ} (0.5≤a<1, BZY) is preferable because it is particularly excellent in proton conductivity and exhibits a high power generation performance. A part of Y that occupies the B site may be replaced with another element (e.g., another lanthanoid element), and a part of Ba that occupies the A site may be replaced with another group-2 element (Sr, Ca, or the like).

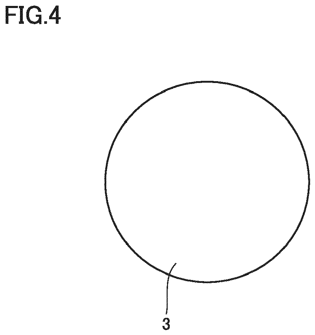

When the anode has a circular sheet-like shape (for example, Fig. 4), the thickness Ta (µm) of the anode and the diameter Da (cm) of the anode preferably satisfy a relation of 55≤Ta/Da≤300, because the residual stress and the warpage of the composite member are further likely to be suppressed. The thickness Ta of the anode and the diameter Da of the anode more preferably satisfy a relation of 56≤Ta/Da≤300, and further preferably satisfy a relation of 70≤Ta/Da≤150.

The diameter of the anode is not particularly limited. The diameter Da of the anode may be 5 cm or more and 15 cm or less, or 7 cm or more and 12 cm or less, for example. When the diameter of the anode is within such a range, the warpage of the composite member is further likely to be suppressed.

### (Solid Electrolyte Layer)

The solid electrolyte layer preferably has a sheet-like shape, and more preferably has a circular sheet-like shape. In addition, the solid electrolyte layer is stacked on the anode. The solid electrolyte layer includes the second metal oxide having a perovskite crystal structure. Such a solid electrolyte layer has proton conductivity. The solid electrolyte layer having proton conductivity moves protons generated at the anode to the cathode.

As the second metal oxide, a solid electrolyte (compound) represented by the following formula (2):

A2ₓB2_{y}C2_{1-y}O_{3-δ} formula (2)

is preferably indicated as an example, where 0.85≤x≤1, 0.5<y<1, and δ represents an oxygen vacancy concentration.

An element A2 is at least one selected from the group consisting of barium (Ba), calcium (Ca), and strontium (Sr). Inter alia, the element A2 preferably includes Ba from the viewpoint of proton conductivity.

An element B2 is at least one selected from the group consisting of cerium (Ce) and zirconium (Zr). Inter alia, the element B2 preferably includes Zr from the viewpoint of proton conductivity.

An element C2 is at least one selected from the group consisting of yttrium (Y), ytterbium (Yb), erbium (Er), holmium (Ho), thulium (Tm), gadolinium (Gd), indium (In), and scandium (Sc). Inter alia, the element C2 preferably includes Y from the viewpoint of proton conductivity and chemical stability.

Inter alia, a compound represented by BaZr_{b}Y_{1-b}O_{3-δ} (0.5≤b<1, BZY) is preferable because it is particularly excellent in proton conductivity and exhibits a high power generation performance. A part of Y that occupies the B site may be replaced with another element (e.g., another lanthanoid element), and a part of Ba that occupies the A site may be replaced with another group-2 element (Sr, Ca, or the like). The first metal oxide included in the anode may be the same compound as or different from the second metal oxide included in the solid electrolyte layer. Inter alia, the first metal oxide is preferably the same compound as the second metal oxide, because it is easy to control the thermal expansion coefficient.

The solid electrolyte layer may include a component other than the second metal oxide, but the content thereof is preferably small. For example, it is preferable that 99% by mass or more of the solid electrolyte layer is the second metal oxide. That is, the content ratio of the second metal oxide in the solid electrolyte layer is preferably 99% by mass or more and 100% by mass or less. The component other than the second metal oxide is not particularly limited, and can include a compound known as a solid electrolyte (including a compound having no proton conductivity). The content ratio of the second metal oxide in the solid electrolyte layer can be determined by an X-ray diffraction method, for example.

When the solid electrolyte layer has a sheet-like shape, the thickness of the solid electrolyte layer is not particularly limited. The thickness Te of the solid electrolyte layer may be 5 µm or more and 30 µm or less, 10 µm or more and 30 µm or less, 15 µm or more and 30 µm or less, or 15 µm or more and 25 µm or less, for example. When the thickness of the solid electrolyte layer is within such a range, the resistance of the solid electrolyte layer is suppressed low. The thickness Te of the solid electrolyte layer can be calculated by taking an SEM photograph of a cross section of the composite member, as described above.

The thickness Ta of the anode and the thickness Te of the solid electrolyte layer preferably satisfy a relation of 0.003≤Te/Ta≤0.036, because the residual stress and the warpage of the composite member are further likely to be suppressed. In this case, the resistance value of the solid electrolyte layer is also suppressed. The thickness Ta of the anode and the thickness Te of the solid electrolyte layer more preferably satisfy a relation of 0.01≤Te/Ta≤0.022.

The solid electrolyte layer may be a stacked body of a plurality of solid electrolyte layers. In this case, each solid electrolyte layer may include the second metal oxide different or identical in type.

### [Cell Structure]

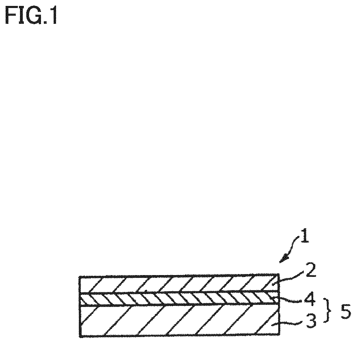

The cell structure in accordance with the present embodiment includes the electrolyte layer-anode composite member described above, and a cathode. In one aspect of the present embodiment, the cathode has a sheet-like shape, and the cathode is stacked on the solid electrolyte layer of the electrolyte layer-anode composite member. Fig. 1 shows a cross section of a cell structure 1 including an electrolyte layer-anode composite member 5 and a cathode 2 in accordance with the present embodiment.

The shape of cell structure 1 from an upper surface thereof may be, although not particularly limited to, a circular shape, to match the shape of the anode (for example, the circular shape shown in Fig. 4). While Fig. 1 shows cell structure 1 in the form of stacked layers, cell structure 1 is not limited thereto in shape. For example, it may be rolled with an anode 3 inside to have a cylindrical shape so as to be hollow. The cylindrical shape has a hollow central portion and has anode 3, a solid electrolyte layer 4, and cathode 2 successively, concentrically arranged as viewed from the inside (not shown). In the example shown in Fig. 1, the thickness Ta of anode 3 is larger than a thickness Tc of cathode 2, but cell structure 1 is not limited thereto in configuration.

### (Cathode)

The cathode has a porous structure that can adsorb, dissociate and ionize oxygen molecules.

A material for the cathode is a third metal oxide having a perovskite crystal structure, for example. As the third metal oxide, a compound represented by the following formula (3):

A3₁₋ₚB3ₚC3_{q}O_{3-δ} formula (3)

is preferably indicated as an example, where 0<p<1, 0<q<1, and δ represents an oxygen vacancy concentration.

An element A3 is at least one selected from the group consisting of La, Sm, and Ba. An element B3 is at least one selected from the group consisting of Sr and Ca. An element C3 is at least one selected from the group consisting of Fe, Co, Mn, and Ni.

Specifically, the third metal oxide includes lanthanum strontium cobalt ferrite (LSCF, La_{1-c}Sr_{c}Co_{1-d}Fe_{d}O_{3-δ}, 0<c<1, 0<d<1, and δ represents an oxygen vacancy concentration), lanthanum strontium manganite (LSM, La₁₋ₑSrₑMnO_{3-δ}, 0<e<1, and δ represents an oxygen vacancy concentration), lanthanum strontium cobaltite (LSC, La_{1-f}Sr_{f}CoO_{3-δ}, 0<f<1, and δ represents an oxygen vacancy concentration), samarium strontium cobaltite (SSC, Sm_{1-g}Sr_{g}CoO_{3-δ}, 0<g<1, and δ represents an oxygen vacancy concentration), and the like. Inter alia, LSCF is preferable because the resistance of the cathode is easily reduced.

The cathode may include a component other than the third metal oxide, but the content thereof is preferably small. For example, it is preferable that 99% by mass or more of the cathode is the third metal oxide. That is, the content ratio of the third metal oxide in the cathode is preferably 99% by mass or more and 100% by mass or less. The component other than the third metal oxide is not particularly limited, and can include a compound known as a material for the cathode (including a compound having no ion conductivity). The content ratio of the third metal oxide in the cathode can be determined by an X-ray diffraction method, for example.

The cathode may include a catalyst such as nickel, iron, cobalt, or the like. The cathode including the catalyst is formed by mixing and sintering the catalyst and the third metal oxide.

When the cathode has a sheet-like shape, the thickness of the cathode is not particularly limited. The thickness of the cathode may be 10 µm or more and 30 µm or less, 15 µm or more and 30 µm or less, or 20 µm or more and 30 µm or less, for example. When the thickness of the cathode is within this range, the internal resistance of the cathode is easily reduced. The thickness of the cathode can be calculated by taking an SEM photograph of a cross section of the cell structure, as described above.

### [Method for Manufacturing Composite Member and Cell Structure]

The composite member is fabricated by a first step of preparing a material for a solid electrolyte layer and a material for an anode, and a second step of forming a first layer (a precursor of the anode) including the material for the anode and a second layer (a precursor of the solid electrolyte layer) including the material for the solid electrolyte layer on a surface of the first layer, and firing the first and second layers. A cell structure is fabricated by additionally performing a third step of preparing a material for a cathode, and stacking and firing a layer including the material for the cathode on a surface of the solid electrolyte layer formed in the second step. Hereinafter, each step will be described in detail.

### (First Step)

A material for the solid electrolyte layer and a material for the anode are prepared.

The material for the solid electrolyte layer and the material for the anode preferably include a binder from the viewpoint of shapability. Examples of the binder include known materials used in manufacturing ceramic materials, e.g., polymer binders such as cellulose derivatives (cellulose ethers) such as ethyl cellulose, vinyl acetate resins (including saponified vinyl acetate resins such as polyvinyl alcohol), and acrylic resins; and waxes such as paraffin wax.

When the material for the anode is subjected to press forming, the amount of the binder included in the material for the anode is, for example, 1 to 15 parts by mass (3 to 10 parts by mass in particular) relative to 100 parts by mass of the above composite oxide (a mixture of the first metal oxide and at least one of nickel and a nickel compound).

Otherwise, the amount of the binder is, for example, 1 to 20 parts by mass (1.5 to 15 parts by mass in particular). The amount of the binder included in the material for the solid electrolyte layer is, for example, 1 to 20 parts by mass (1.5 to 15 parts by mass in particular) relative to 100 parts by mass of the second metal oxide.

Each material may include a dispersion medium such as water, an organic solvent (e.g., hydrocarbons such as toluene (aromatic hydrocarbons); alcohols such as ethanol and isopropanol; and carbitols such as butyl carbitol acetate), as necessary. Each material may include a variety of types of additives, such as a surfactant, a deflocculant (such as polycarboxylic acid), and the like, as necessary.

### (Second Step)

In the second step, a first layer including the material for the anode and a second layer including the material for the solid electrolyte layer are stacked to form a stacked body, and the stack body is fired.

The method for forming each layer is not particularly limited, and may be selected as appropriate depending on the layer's desired thickness. The first layer is typically shaped by performing press forming, tape casting, or the like on the material for the anode. The second layer is typically shaped by performing an existing method such as screen printing, spray coating, spin coating, dip coating, or the like on the material for the solid electrolyte layer.

Specifically, first, the material for the anode is formed into a predetermined shape by press forming. The predetermined shape is, for example, in the form of a pellet, a plate, a sheet, or the like. Prior to this shaping, the material for the anode may be granulated and then granules may be shaped. If necessary, the obtained granules may be disintegrated and then shaped.

Subsequently, the material for the solid electrolyte layer is applied to a surface of the shaped first layer for example by screen printing, spray coating, spin coating, dip coating, or the like to form a second layer. A stacked body is thus obtained.

Before the material for the solid electrolyte layer is applied, a step of calcining the first layer may be performed. The calcination may be performed at a temperature lower than a temperature at which the material for the anode is sintered (e.g., 900°C to 1 100°C). The calcination facilitates applying the material for the solid electrolyte layer.

Subsequently, the obtained stacked body is fired. The firing is performed by heating the obtained stacked body in an oxygen-containing atmosphere to 1200°C to 1700°C, for example. The oxygen content in the firing atmosphere is not particularly limited. The firing may be performed for example in an air atmosphere (oxygen content: about 20% by volume) or in pure oxygen (oxygen content: 100% by volume). The firing can be performed at a normal pressure or a high pressure.

Before the stacked body is fired, a resin component such as a binder included in each material may be removed. That is, after the material for the solid electrolyte layer is applied, the stacked body is heated in the air to a relatively low temperature of about 500°C to 700°C to remove a resin component included in each material. Thereafter, the above-described firing is performed.

In the second step, the first and second layers are co-sintered. The anode and the solid electrolyte layer are thus formed to be integrated.

### (Third Step)

In the third step, a material for the cathode is prepared, and a layer including the material for the cathode is stacked and fired on a surface of the solid electrolyte layer formed in the second step. The cathode is thus formed. The firing is performed in an oxygen-containing atmosphere similar to the above at 800 to 1100°C, for example.

Similar to the above, the material for the cathode may also be stacked on the surface of the solid electrolyte layer by using a cathode dispersion such as paste or slurry mixed with a binder or the like. The cathode dispersion is stacked for example by the same method as the method for forming the second layer. The amount of the binder included in the cathode dispersion is, for example, 1 to 20 parts by mass (1.5 to 15 parts by mass, in particular) relative to 100 parts by mass of the first metal oxide.

### [Examples]

Hereinafter, the present invention will be described more specifically based on a simulation. It should be noted, however, that the following simulation does not limit the present invention.

### (1) Model

A composite member (diameter: 10 cm) obtained by co-sintering a first layer (a precursor of an anode) made of a material for the anode including 30% by volume of BZY (BaZr_{0.8}Y_{0.2}O_{2.9}) and 70% by volume of NiO, and a second layer (a precursor of a solid electrolyte layer) including BZY (BaZr_{0.8}Y_{0.2}O_{2.9}) was used as a model.

### (2) Conditions and Results of Simulation

Residual stress and a warpage amount were simulated in the above model, with the thickness of the co-sintered first layer (that is, the thickness Ta of the anode) being changed from 600 µm to 1800 µm in 300-µm increments. The thickness Te of the solid electrolyte layer was set to 20 µm.

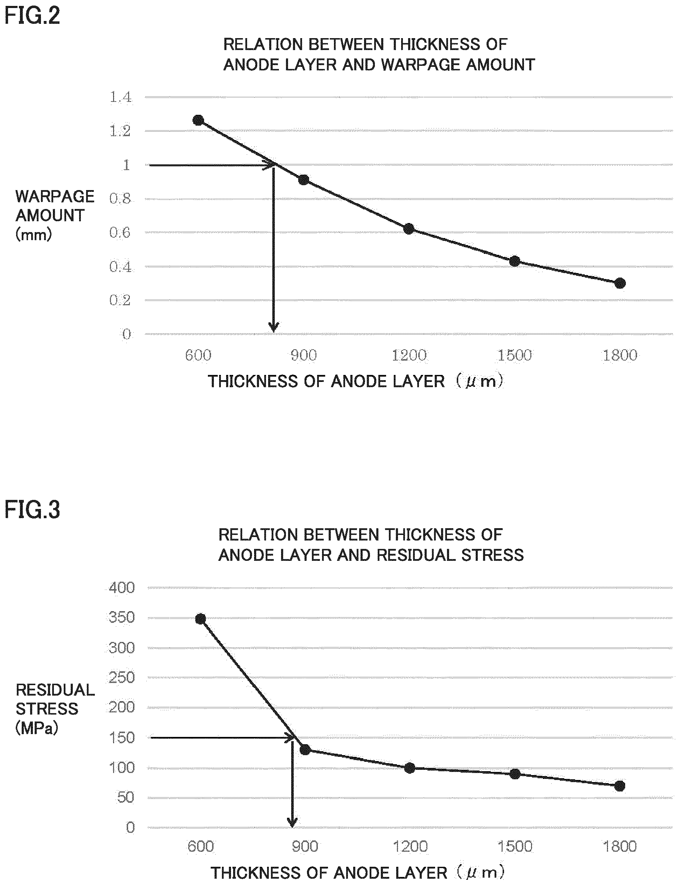

The warpage amount was obtained as a minimal distance between a horizontal plane and the highest point of a convex of the composite member, based on an assumption that the composite member was placed on the horizontal plane with its convex facing upward. It was assumed that the residual stress was measured by a measuring method using an X-ray diffraction method. Figs. 2 and 3 show results.

### (3) Evaluation

A cell structure including a composite member having the same configuration as that described above and a 10-µm-thick cathode including LSCF (La_{0.6}Sr_{0.4}Co_{0.2}Feo.₈O_{3-δ}) was additionally fabricated, and a transverse intensity thereof was measured according to JIS R 1601:2008. The transverse intensity (actually measured value) of the cell structure was 152 MPa.

As can be seen from Figs. 2 and 3, when the thickness Ta of the anode was 850 µm or more, the warpage amount was 1 mm or less, and the residual stress was 152 MPa or less.

It should be noted that both the transverse intensity of the cell structure and the residual stress of the composite member are influenced by the material and the thickness of each of the anode and the solid electrolyte layer. However, although the transverse intensity of the cell structure and the residual stress of the composite member increase or decrease depending on the material and the thickness of each of the anode and the solid electrolyte layer, they have the same tendency to increase or decrease. Accordingly, for example when the anode includes the first metal oxide represented by the above formula (1) and the solid electrolyte layer includes the second metal oxide represented by the above formula (2), the residual stress of the composite member also decreases if the thickness Ta of the anode is 850 µm or more. Similarly, when the anode includes the first metal oxide represented by the above formula (1) and the solid electrolyte layer includes the second metal oxide represented by the above formula (2), the warpage amount decreases if the thickness Ta of the anode is 850 µm or more.

### REFERENCE SIGNS LIST

1: cell structure; 2: cathode; 3: anode; 4: solid electrolyte layer; 5: composite member.

## Claims

1. An electrolyte layer-anode composite member comprising:
an anode including a first metal oxide having a perovskite crystal structure; and
a solid electrolyte layer including a second metal oxide having a perovskite crystal structure,
the anode including at least one of nickel and a nickel compound,
the anode having a sheet-like shape,
the solid electrolyte layer having a sheet-like shape,
the solid electrolyte layer being stacked on the anode,
the anode having a thickness Ta of 900 µm or more and 1200 µm or less,
the thickness Ta (µm) of the anode and the diameter Da (cm) of the anode satisfy a relation of 70≤Ta/Da≤150.

2. The electrolyte layer-anode composite member according to claim 1, wherein the first metal oxide is represented by the following formula (1):
A1ₘB1ₙC1₁₋ₙO_{3-δ} formula (1),
where an element A1 is at least one selected from the group consisting of Ba, Ca, and Sr, an element B1 is at least one selected from the group consisting of Ce and Zr, an element C1 is at least one selected from the group consisting of Y, Yb, Er, Ho, Tm, Gd, In, and Sc, 0.85≤m≤1, 0.5≤n<1, and δ represents an oxygen vacancy concentration.

3. The electrolyte layer-anode composite member according to claim 1 or 2, wherein the second metal oxide is represented by the following formula (2):
A2ₓB2_{y}C2_{1-y}O_{3-δ} formula (2),
where an element A2 is at least one selected from the group consisting of Ba, Ca, and Sr, an element B2 is at least one selected from the group consisting of Ce and Zr, an element C2 is at least one selected from the group consisting of Y, Yb, Er, Ho, Tm, Gd, In, and Sc, 0.85≤x≤1, 0.5≤y<1, and δ represents an oxygen vacancy concentration.

4. The electrolyte layer-anode composite member according to any one of claims 1 to 3, wherein the thickness Ta of the anode and a thickness Te of the solid electrolyte layer satisfy a relation of 0.003≤Te/Ta≤0.036.

5. The electrolyte layer-anode composite member according to any one of claims 1 to 4, wherein a thickness Te of the solid electrolyte layer is 5 µm or more and 30 µm or less.

6. The electrolyte layer-anode composite member according to any preceding claim, wherein the diameter Da of the anode is 5 cm or more and 15 cm or less.

7. A cell structure comprising:
the electrolyte layer-anode composite member according to any one of claims 1 to 6; and
a cathode,
the cathode having a sheet-like shape,
the cathode being stacked on the solid electrolyte layer of the electrolyte layer-anode composite member.

## Patentansprüche

1. Elektrolytschicht-Anode-Verbundglied, umfassend:
eine Anode, die ein erstes Metalloxid mit einer Perowskit-Kristallstruktur aufweist, und
eine solide Elektrolytschicht, die ein zweites Metalloxid mit einer Perowskit-Kristallstruktur aufweist,
wobei die Anode Nickel und/oder eine Nickelverbindung enthält,
wobei die Anode eine schichtartige Form aufweist,
wobei die solide Elektrolytschicht eine schichtartige Form aufweist,
wobei die solide Elektrolytschicht auf die Anode gestapelt ist,
wobei die Anode eine Dicke Ta von 900 µm oder mehr und 1200 µm oder weniger aufweist,
wobei die Dicke Ta (µm) der Anode und der Durchmesser Da (cm) der Anode die Beziehung 70≤Ta/Da≤150 erfüllen.

2. Elektrolytschicht-Anode-Verbundglied nach Anspruch 1, wobei das erste Metalloxid durch die folgende Formel (1) wiedergegeben wird:
A1ₘB1ₙC1₁₋ₙO_{3-δ} Formel (1)
wobei ein Element A1 wenigstens eines ist, das aus der Gruppe ausgewählt ist, die aus Ba, Ca und Sr besteht, wobei ein Element B1 wenigstens eines ist, das aus der Gruppe ausgewählt ist, die aus Ce und Zr besteht, wobei ein Element C1 wenigstens eines ist, das aus der Gruppe ausgewählt ist, die aus Y, Yb, Er, Ho, Tm, Gd, In und Sc besteht, wobei 0,85≤m≤1, 0,5≤n<1 und wobei δ eine Sauerstoffdefektkonzentration wiedergibt.

3. Elektrolytschicht-Anode-Verbundglied nach Anspruch 1 oder 2, wobei das zweite Metalloxid durch die folgende Formel (2) wiedergegeben wird:
A2ₓB2_{y}C2_{1-y}O_{3-δ} Formel (2)
wobei ein Element A2 wenigstens eines ist, das aus der Gruppe ausgewählt ist, die aus Ba, Ca und Sr besteht, wobei ein Element B2 wenigstens eines ist, das aus der Gruppe ausgewählt ist, die aus Ce und Zr besteht, wobei ein Element C2 wenigstens eines ist, das aus der Gruppe ausgewählt ist, die aus Y, Yb, Er, Ho, Tm, Gd, In und Sc besteht, wobei 0,85≤x≤1, 0,5≤y<1 und wobei δ eine Sauerstoffdefekt wiedergibt.

4. Elektrolytschicht-Anode-Verbundglied nach einem der Ansprüche 1 bis 3, wobei die Dicke Ta der Anode und die Dicke Te der soliden Elektrolytschicht die Beziehung 0,003≤Te/Ta≤0,036 erfüllen.

5. Elektrolytschicht-Anode-Verbundglied nach einem der Ansprüche 1 bis 4, wobei die Dicke Te der soliden Elektrolytschicht 5 µm oder mehr und 30 µm oder weniger beträgt.

6. Elektrolytschicht-Anode-Verbundglied nach einem der Ansprüche, wobei der Durchmesser Da der Anode 5 cm oder mehr und 15 cm oder weniger beträgt.

7. Zellenstruktur, umfassend:
das Elektrolytschicht-Anode-Verbundglied gemäß einem der Ansprüche 1 bis 6, und
eine Kathode,
wobei die Kathode eine schichtartige Form aufweist,
wobei die Kathode auf der soliden Elektrolytschicht des Elektrolytschicht-Anode-Verbundglieds gestapelt ist.

## Revendications

1. Élément composite couche d'électrolyte-anode comprenant:
une anode incluant un premier oxyde métallique ayant une structure cristalline de perovskite; et
une couche d'électrolyte solide incluant un deuxième oxyde métallique ayant une structure cristalline de perovskite,
l'anode incluant au moins un parmi le nickel et un composé du nickel,
l'anode ayant une forme analogue à une feuille,
la couche d'électrolyte solide ayant une forme analogue à une feuille,
la couche d'électrolyte solide étant empilée sur l'anode,
l'anode ayant une épaisseur Ta de 900 µm ou plus et de 1200 µm ou moins,
l'épaisseur Ta (µm) de l'anode et le diamètre Da (cm) de l'anode satisfont une relation de 70≤Ta/Da≤150.

2. Élément composite couche d'électrolyte-anode selon la revendication 1, dans lequel le premier oxyde métallique est représenté par la formule (1) suivante:
A1ₘB1ₙC1₁₋ₙO_{3-δ} formule (1),
où un élément A1 est au moins un choisi dans le groupe consistant en Ba, Ca et Sr, un élément B1 est au moins un choisi dans le groupe consistant en Ce et Zr, un élément C1 est au moins un choisi dans le groupe consistant en Y, Yb, Er, Ho, Tm, Gd, In et Sc, 0,85≤m≤1, 0,5≤n<1, et δ représente une concentration de lacunes d'oxygène.

3. Élément composite couche d'électrolyte-anode selon la revendication 1 ou 2, dans lequel le deuxième oxyde métallique est représenté par la formule (2) suivante:
A2ₓB2_{y}C2_{1-y}O_{3-δ} formule (2),
où un élément A2 est au moins un choisi dans le groupe consistant en Ba, Ca et Sr, un élément B2 est au moins un choisi dans le groupe consistant en Ce et Zr, un élément C2 est au moins un choisi dans le groupe consistant en Y, Yb, Er, Ho, Tm, Gd, In et Sc, 0,85≤x≤1, 0,5≤y<1, et δ représente une concentration de lacunes d'oxygène.

4. Élément composite couche d'électrolyte-anode selon l'une quelconque des revendications 1 à 3, dans lequel l'épaisseur Ta de l'anode et une épaisseur Te de la couche d'électrolyte solide satisfont une relation de 0,003≤Te/Ta≤0,036.

5. Élément composite couche d'électrolyte-anode selon l'une quelconque des revendications 1 à 4, dans lequel une épaisseur Te de la couche d'électrolyte solide est 5 µm ou plus et 30 µm ou moins.

6. Élément composite couche d'électrolyte-anode selon l'une quelconque des revendications précédentes, dans lequel le diamètre Da de l'anode est 5 cm ou plus et 15 cm ou moins.

7. Structure de pile comprenant:
l'élément composite couche d'électrolyte-anode selon l'une quelconque des revendications 1 à 6; et
une cathode,
la cathode ayant une forme analogue à une feuille,
la cathode étant empilée sur la couche d'électrolyte solide de l'élément composite couche d'électrolyte-anode.
